# EUROPEAN PATENT SPECIFICATION

(11) **EP 4 098 712 B1**
(45) Date of publication and mention of the grant of the patent: **10.06.2026**
(21) Application number: 21746923.8
(22) Date of filing: 21.01.2021
(51) Int. Cl.: C09J 11/06, C08G 61/08, C09J 145/00, C08F 232/00, C09J 123/00, C09J 11/08, C08L 65/00, C09D 165/00

(54) **PRESSURE-SENSITIVE ADHESIVE COMPOSITION**
DRUCKEMPFINDLICHE HAFTMITTELZUSAMMENSETZUNG
COMPOSITION ADHÉSIVE SENSIBLE À LA PRESSION

(30) Priority: 31.01.2020 JP 2020014746
(43) Date of publication of application: 07.12.2022
(73) Proprietor: Zeon Corporation, Tokyo 100-8246 (JP)
(72) Inventor: SAKURAI, Takuro, Tokyo 100-8246 (JP); NOZAWA, Atsushi, Tokyo 100-8246 (JP)
(74) Representative: Maiwald GmbH
(86) International application number: PCT/JP2021/002055
(87) International publication number: WO 2021/153417

(56) References cited:
- EP-A1- 2 963 074
- EP-A1- 3 354 675
- WO-A1-2014/133028
- WO-A1-2019/065178
- JP-A- 2000 219 860
- JP-A- 2001 168 113
- JP-A- 2001 168 113
- JP-A- 2006 321 824
- JP-A- 2019 065 179
- JP-A- H11 323 278
- JP-A- S62 241 944

## Description

### TECHNICAL FIELD

The present invention pertains to an adhesive composition, and more specifically pertains to an adhesive composition having high holding power.

### BACKGROUND ART

Hot-melt adhesives are adhesives which can efficiently bond a variety of products because of their short solidification time, and have high safety to human bodies because they are solvent-free. For these reasons, the hot-melt adhesives have been used in a variety of fields. Example of applications of the hot-melt adhesives include sealing adhesives for paper, cardboard, and films used in packaging of food products, clothing articles, electronic devices, cosmetics, and the like, adhesives for bonding constituent parts in production of hygiene products such as disposable diapers and sanitary items, and adhesives for forming adhesive layers of adhesive tapes and labels.

For example, Patent Document 1 proposes an adhesive composition intended for use as an adhesive such as a hot-melt adhesive, the composition containing a cyclopentene ring-opened polymer and a tackifier, the cyclopentene ring-opened polymer containing cyclopentene-derived structural units, 50% or less of which are in the cis form. On the other hand, further improved holding power has been desired because it is a key feature for adhesive applications.

Patent Document 2 proposes a ring-opened copolymer comprising cyclopentene and a cyclic olefin containing an aromatic ring. Patent Document 2, however, is totally silent on use of such a ring-opened copolymer in adhesive applications, and holding power, which is a key feature for adhesive applications, is not investigated at all.

Patent Document 3 relates to a semiconductor element adhesive material composition comprising a polymer obtained by metathesis polymerization having a modulus of elasticity at room temperature of 1.5 GPa or less and a number average molecular weight of 5,000 to 500,000 as well as a curable resin.

### RELATED ART

### PATENT DOCUMENTS

Patent Document 1: Japanese Patent Application Publication No. 2019-142994
Patent Document 2: International Publication No. WO 2014/142994
Patent Document 3: Japanese Patent Application Publication No. 2001-168113

### SUMMARY OF THE INVENTION

### PROBLEM TO BE SOLVED BY THE INVENTION

The present invention has been made in consideration of such circumstances. An objective of the present invention is to provide an adhesive composition having high holding power.

### MEANS FOR SOLVING PROBLEMS

The present inventor has conducted studies to achieve the above objective, and has found that high holding power can be achieved by an adhesive composition prepared using a ring-opened copolymer containing a structural unit derived from a monocyclic olefin and a structural unit derived from a polycyclic olefin in combination with a tackifying resin. This finding has led to the accomplishment of the present invention as set out in the appended set of claims.

Specifically, the present invention provides an adhesive composition which comprises a ring-opened copolymer containing a structural unit derived from a monocyclic olefin and a structural unit derived from a polycyclic olefin; and a tackifying resin, wherein the tackifying resin is a C5/C9 petroleum resin.

In the adhesive composition according to the present invention, the structural unit derived from a monocyclic olefin preferably constitutes 5 to 95% by mass of the ring-opened copolymer.

In the adhesive composition according to the present invention, the structural unit derived from a polycyclic olefin preferably constitutes 5 to 95% by mass of the ring-opened copolymer.

In the adhesive composition according to the present invention, the cis/trans ratio of the structural unit derived from a polycyclic olefin is preferably 10/90 to 55/45.

In the adhesive composition according to the present invention, the ring-opened copolymer preferably has a glass transition temperature of -90 to 0°C.

In the adhesive composition according to the present invention, the tackifying resin preferably has a softening point of 70 to 140°C.

Preferably, the adhesive composition according to the present invention further comprises a plasticizer.

Preferably, the adhesive composition according to the present invention further comprises an antioxidant.

### EFFECTS OF INVENTION

The present invention can provide an adhesive composition having high holding power.

### DESCRIPTION OF EMBODIMENTS

### (Adhesive composition)

The adhesive composition according to the present invention contains a ring-opened copolymer containing a structural unit derived from a monocyclic olefin and a structural unit derived from a polycyclic olefin; and a tackifying resin.

### (Ring-opened copolymer)

The ring-opened copolymer used in the present invention has a structural unit derived from a monocyclic olefin and a structural unit derived from a polycyclic olefin.

The monocyclic olefin for forming the structural unit derived from a monocyclic olefin may be any olefin without limitation as long as it has only one ring structure. Examples thereof include cyclic monoolefins such as cyclopropene, cyclobutene, cyclopentene, methylcyclopentene, cyclohexene, methylcyclohexene, cycloheptene, and cyclooctene; cyclic diolefins such as cyclohexadiene, methyl cyclohexadiene, cyclooctadiene, and methyl cyclooctadiene; and the like.

These monocyclic olefins may be used alone or in combination. Preferred monocyclic olefins are cyclopentene, cyclohexene, cycloheptene, and cyclooctene. From the viewpoint of reliably providing the advantageous effects of the present invention, cyclopentene and cyclooctene are more preferred, and cyclopentene is particularly preferred.

In the ring-opened copolymer used in the present invention, the cis/trans ratio of the structural unit derived from a monocyclic olefin is preferably 0/100 to 90/10, more preferably 5/95 to 60/40, still more preferably, further still more preferably 10/90 to 50/50, particularly preferably 12/88 to 40/60, and may be 15/85 to 20/80, for example. The cis/trans ratio refers to the ratio of the contents of the cis structure and the trans structure of double bonds in repeating structural units which correspond to the structural unit derived from a monocyclic olefin (cis content/trans content). By controlling the cis/trans ratio within the above ranges, the holding power of the resulting adhesive composition can be further enhanced.

Although not particularly limited, the proportion of the structural unit derived from a monocyclic olefin is preferably 5 to 95% by mass, more preferably 10 to 90% by mass of the total repeating units of the ring-opened copolymer used in the present invention. From the viewpoint of providing the resulting adhesive composition with further enhanced holding power, the proportion of the structural unit derived from a monocyclic olefin is more preferably 40 to 80% by mass, still more preferably 55 to 75% by mass of the total repeating units. From the viewpoint of providing the resulting adhesive composition with high holding power balanced with high peel strength, the proportion of the structural unit derived from a monocyclic olefin is preferably 70 to 90% by mass, more preferably 78 to 88% by mass of the total repeating units. By controlling the proportion of the structural unit derived from a monocyclic olefin within the above ranges, the holding power of the resulting adhesive composition can be further enhanced.

In the present invention, the polycyclic olefin for forming the structural unit derived from a polycyclic olefin may be any olefin without limitation as long as it has multiple ring structures. Examples thereof include norbornene compounds represented by General Formula (1) below. 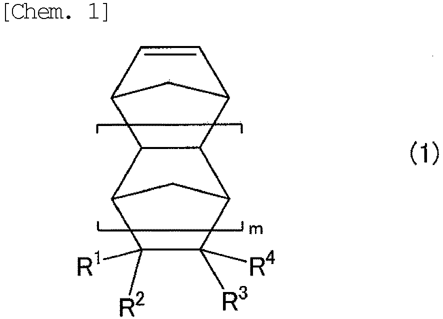 (In the formula, R¹ to R⁴ each represent a hydrogen atom, a hydrocarbon group having 1 to 20 carbon atoms, or a substituent containing a halogen atom, a silicon atom, an oxygen atom, or a nitrogen atom, and R² and R³ may be linked to each other to form a ring. m is an integer of 0 to 2.)

Specific examples of norbornene compounds represented by General Formula (1) include the following compounds:
bicyclo[2.2.1]hept-2-enes which are unsubstituted or substituted by a hydrocarbon substituent, such as 2-norbornene, 5-methyl-2-norbornene, 5-ethyl-2-norbornene, 5-butyl-2-norbornene, 5-hexyl-2-norbornene, 5-decyl-2-norbornene, 5-cyclohexyl-2-norbornene, 5-cyclopentyl-2-norbornene, 5-ethylidene-2-norbornene, 5-vinyl-2-norbornene, 5-propenyl-2-norbornene, 5-cyclohexenyl-2-norbornene, 5-cyclopentenyl-2-norbornene, 5-phenyl-2-norbornene, tetracyclo [9.2.1. 0^{2,10}.0^{3,8}]tetradeca-3,5,7,12-tetraene (also referred to as 1,4-methano-1, 4, 4a, 9a-tetrahydro-9H-fluorene), tetracyclo [10.2.1.0^{2,11}.0^{4,9}]pentadeca-4,6,8, 13-tetraene (also referred to as 1,4-methano-1,4,4a,9,9a,10-hexahydroanthracene), dicyclopentadiene, methyl dicyclopentadiene, and dihydrodicyclopentadiene (tricyclo [5.2.1.0^{2,6}]dec-8-ene) ;
tetracyclo [6.2.1.1^{3,6}.0^{2,7}]dodec-4-enes which are unsubstituted or substituted by a hydrocarbon substituent, such as tetracyclo [6.2.1.1^{3,6}.0^{2,7}]dodec-4-ene, 9-methyltetracyclo[6.2.1.1^{3,6}.0^{2,7}]dodec-4-ene, 9-ethyltetracyclo[6.2.1.1^{3,6}.0^{2,7}]dodec-4-ene, 9-cyclohexyltetracyclo[6.2.1.1^{3,6}.0^{2,7}]dodec-4-ene, 9-cyclopentyltetracyclo[6.2.1.1^{3,6}.0^{2,7}]dodec-4-ene, 9-methylenetetracyclo[6.2.1.1^{3,6}.0^{2,7}]dodec-4-ene, 9-ethylidenetetracyclo[6.2.1.1^{3,6}.0^{2,7}]dodec-4-ene, 9-vinyltetracyclo[6.2.1.1^{3,6}.0^{2,7}]dodec-4-ene, 9-propenyltetracyclo[6.2.1.1^{3,6}.0^{2,7}]dodec-4-ene, 9-cyclohexenyltetracyclo[6.2.1.1^{3,6}.0^{2,7}]dodec-4-ene, 9-cyclopentenyltetracyclo[6.2.1.1^{3,6}.0^{2,7}]dodec-4-ene, and 9-phenyltetracyclo[6.2.1.1^{3,6}.0^{2,7}]dodec-4-ene;
bicyclo[2.2.1]hept-2-enes having an alkoxycarbonyl group, such as methyl 5-norbornene-2-carboxylate, ethyl 5-norbornene-2-carboxylate, methyl 2-methyl-5-norbornene-2-carboxylate, and ethyl 2-methyl-5-norbornene-2-carboxylate;
tetracyclo[6.2.1.1^{3,6}.0^{2,7}]dodec-4-enes having an alkoxycarbonyl group, such as methyl tetracyclo[6.2.1.1^{3,6}.0^{2,7}]dodec-9-ene-4-carboxylate and methyl 4-methyltetracyclo[6.2.1.1^{3,6}.0^{2,7}]dodec-9-ene-4-carboxylate;
bicyclo[2.2.1]hept-2-enes having a hydroxycarbonyl group or an acid anhydride group, such as 5-norbornene-2-carboxylic acid, 5-norbornene-2,3-dicarboxylic acid, and 5-norbornene-2,3-dicarboxylic acid anhydride;
tetracyclo[6.2.1.1^{3,6}.0^{2,7}]dodec-4-enes having a hydroxycarbonyl group or an acid anhydride group, such as tetracyclo[6.2.1.1^{3,6}.0^{2,7}]dodec-9-ene-4-carboxylic acid, tetracyclo[6.2.1.1^{3,6}.0^{2,7}]dodec-9-ene-4,5-dicarboxylic acid, and tetracyclo[6.2.1.1^{3,6}.0^{2,7}]dodec-9-ene-4,5-dicarboxylic acid anhydride;
bicyclo[2.2.1]hept-2-enes having a hydroxyl group, such as 5-hydroxy-2-norbornene, 5-hydroxymethyl-2-norbornene, 5,6-di(hydroxymethyl)-2-norbornene, 5,5-di(hydroxymethyl)-2-norbornene, 5-(2-hydroxyethoxycarbonyl)-2-norbornene, and 5-methyl-5-(2-hydroxyethoxycarbonyl)-2-norbornene;
tetracyclo[6.2.1.1^{3,6}.0^{2,7}]dodec-4-enes having a hydroxyl group, such as tetracyclo [6.2.1.1^{3,6}.0^{2,7}]dodec-9-ene-4-methanol and tetracyclo[6.2.1.1^{3,6}.0²⁷]dodec-9-ene-4-ol;
bicyclo[2.2.1]hept-2-enes having a hydrocarbonyl group, such as 5-norbornene-2-carbaldehyde;
tetracyclo[6.2.1.1^{3,6}.0^{2,7}]dodec-4-enes having a hydrocarbonyl group, such as tetracyclo[6.2.1.1^{3,6}.0^{2,7}]dodec-9-ene-4-carbaldehyde;
bicyclo[2.2.1]hept-2-enes having an alkoxycarbonyl group and a hydroxycarbonyl group, such as 3-methoxycarbonyl-5-norbornene-2-carboxylic acid;
bicyclo[2.2.1]hept-2-enes having a carbonyloxy group, such as 5-norbornene-2-yl acetate, 2-methyl-5-norbornene-2-yl acetate, 5-norbornene-2-yl acrylate, and 5-norbornene-2-yl methacrylate;
tetracyclo[6.2.1.1³,⁶.0²,⁷]dodec-4-enes having a carbonyloxy group, such as 9-tetracyclo[6.2.1.1^{3,6}.0^{2,7}]dodec-4-enyl acetate, 9-tetracyclo[6.2.1.1^{3,6}.0^{2,7}]dodec-4-enyl acrylate, and 9-tetracyclo[6.2.1.1^{3,6}.0^{2,7}]dodec-4-enyl methacrylate;
bicyclo[2.2.1]hept-2-enes having a nitrogen-containing functional group, such as 5-norbornene-2-carbonitrile, 5-norbornene-2-carboxyamide, and 5-norbornene-2,3-dicarboxic acid imide;
tetracyclo[6.2.1.1^{3,6}.0^{2,7}]dodec-4-enes having a nitrogen-containing functional group, such as tetracyclo[6.2.1.1^{3,6}.0^{2,7}]dodec-9-ene-4-carbonitrile, tetracyclo[6.2.1.1^{3,6}.0^{2,7}]dodec-9-ene-4-carboxyamide, and tetracyclo[6.2.1.1^{3,6}.0^{2,7}]dodec-9-ene-4-dicarboxic acid imide;
bicyclo[2.2.1]hept-2-enes having a halogen atom, such as 5-chloro-2-norbornene;
tetracyclo[6.2.1.1^{3,6}.0^{2,7}]dodec-4-enes having a halogen atom, such as 9-chlorotetracyclo[6.2.1.1^{3,6}.0^{2,7}]dodec-4-ene;
bicyclo[2.2.1]hept-2-enes having a silicon atom-containing functional group, such as 5-trimethoxysilyl-2-norbornene and 5-triethoxysilyl-2-norbornene; and
tetracyclo[6.2.1.1^{3,6}.0^{2,7}]dodec-4-enes having a silicon atom-containing functional group, such as 4-trimethoxysilyltetracyclo[6.2.1.1^{3,6}.0^{2,7}]dodec-9-ene and 4-triethoxysilyltetracyclo[6.2.1.1^{3,6}.0^{2,7}]dodec-9-ene.

Among the norbornene compounds represented by General Formula (1), preferred are those where m in General Formula (1) is 0 or 1. In General Formula (1), R¹ to R⁴ may be the same or different.

Furthermore, among the norbornene compounds represented by General Formula (1), preferred are those where R¹ to R⁴ in General Formula (1) are each a hydrogen atom, a chain hydrocarbon group having 1 to 20 carbon atoms, or a substituent having a halogen atom, a silicon atom, an oxygen atom, or a nitrogen atom from the viewpoint of providing the resulting adhesive composition with further enhanced holding power. In this case, R¹ to R⁴ are preferably groups which are not linked to one another and do not form a ring, and may be the same or different. R¹ to R⁴ are preferably a hydrogen atom or an alkyl group having 1 to 3 carbon atoms. Also in this case, those where m is 0 or 1 are preferred.

Preferred examples of norbornene compounds of General Formula (1) where R¹ to R⁴ are a hydrogen atom, a chain hydrocarbon group having 1 to 20 carbon atoms, or a substituent containing a halogen atom, a silicon atom, an oxygen atom or a nitrogen atom are bicyclo[2.2.1]hept-2-enes which are unsubstituted or substituted by a hydrocarbon substituent and tetracyclo[6.2.1.1^{3,6}.0^{2,7}]dodec-4-enes which are unsubstituted or substituted by a hydrocarbon substituent. Among these, 2-norbornene, 5-methyl-2-norbornene, 5-ethyl-2-norbornene, 5-ethylidene-2-norbornene, and tetracyclo[6.2.1.1^{3,6}.0^{2,7}]dodec-4-ene are more preferred, and from the viewpoint of reliably providing the advantageous effects of the present invention, 2-norbornene, 5-methyl-2-norbornene, and tetracyclo[6.2.1.1^{3,6}.0^{2,7}]dodec-4-ene are still more preferred, and 2-norbornene and tetracyclo[6.2.1.1^{3,6}.0^{2,7}]dodec-4-ene are particularly preferred.

For norbornene compounds represented by General Formula (1) where R² and R³ are linked to each other to form a ring, suitable examples of the ring structure specifically include cyclopentane, cyclopentene, cyclohexane, cyclohexene, and benzene rings and the like. These may form a polycyclic structure, and may further have a substituent. Among these, preferred are cyclopentane, cyclopentene, and benzene rings, and in particular, a compound having a cyclopentene ring alone or a compound having a polycyclic structure of a cyclopentane ring and a benzene ring is preferred. Note that R¹ and R⁴ other than R² and R³ forming a ring structure may be the same or different, and R¹ and R⁴ are preferably each a hydrogen atom or an alkyl group having 1 to 3 carbon atoms. In addition, in this case, compounds where m is 0 are preferred.

For compounds where R² and R³ are bonded to each other to form a ring, bicyclo[2.2.1]hept-2-enes which are unsubstituted or have a hydrocarbon substituent are preferred, and in particular, dicyclopentadiene, methyldicyclopentadiene, dihydrodicyclopentadiene, 1,4-methano-1,4,4a,9a-tetrahydro-9H-fluorene, and 1,4-methano-1,4,4a,9,9a,10-hexahydroanthracene are preferred, and dicyclopentadiene, 1,4-methano-1,4,4a,9a-tetrahydro-9H-fluorene are more preferred.

Alternatively, the polycyclic olefin may be a polycyclic olefin having an aromatic ring. Examples of such polycyclic olefins having an aromatic ring include phenylcyclooctene, 5-phenyl-1,5-cyclooctadiene, phenylcyclopentene, and the like.

These polycyclic olefins may be used alone or in combination.

In the ring-opened copolymer used in the present invention, the cis/trans ratio of the structural unit derived from a polycyclic olefin is preferably 0/100 to 90/10, more preferably 5/95 to 65/35, still more preferably 10/90 to 55/45, particularly preferably 13/87 to 55/45, and may be 15/85 to 30/70, for example. The cis/trans ratio refers to the ratio of the contents of the cis structure and the trans structure of double bonds in repeating structural units which correspond to the structural unit derived from a polycyclic olefin (cis double bond/trans double bond ratio). By controlling the cis/trans ratio within the above ranges, the holding power of the resulting adhesive composition can be further enhanced.

Although not particularly limited, the proportion of the structural unit derived from a polycyclic olefin is preferably 5 to 95% by mass, more preferably 10 to 90% by mass of the total repeating units of the ring-opened copolymer used in the present invention. From the viewpoint of providing the resulting adhesive composition with further enhanced holding power, the proportion of the structural unit derived from a polycyclic olefin is more preferably 20 to 60% by mass, still more preferably 25 to 45% by mass of the total repeating units. From the viewpoint of providing the resulting adhesive composition with high holding power balanced with high peel strength, the proportion of the structural unit derived from a monocyclic olefin in the total repeating structural units is more preferably 10 to 30% by mass, still more preferably 12 to 22% by mass of the total repeating units. By controlling the proportion of the structural unit derived from a polycyclic olefin within the above ranges, the holding power of the resulting adhesive composition can be further enhanced.

The ring-opened copolymer used in the present invention may be prepared by copolymerizing the monocyclic olefin and the polycyclic olefin with an additional monomer copolymerizable with the former monomers. The proportion of structural units derived from the additional monomer is preferably 10% by mass or less, more preferably 5% by mass or less of the total repeating units in the ring-opened copolymer, and particularly preferably, such structural units derived from an additional monomer are substantially absent in the present invention. In other words, the ring-opened copolymer is preferably composed of substantially only structural units derived from the monocyclic olefin and structural units derived from the polycyclic olefin.

The weight average molecular weight (Mw) of the ring-opened copolymer used in the present invention is not particularly limited. The polystyrene-equivalent weight average molecular weight (Mw) of the ring-opened copolymer determined by gel permeation chromatography is preferably 100,000 to 1,000,000, more preferably 120,000 to 800,000, still more preferably 120,000 to 600,000, particularly preferably 150,000 to 400,000. By controlling the molecular weight of the ring-opened copolymer used in the present invention within such ranges, the holding power of the resulting adhesive composition can be further enhanced. Although not particularly limited, the ratio (Mw/Mn) between the weight average molecular weight (Mw) and the number average molecular weight (Mn) determined as polystyrene-equivalent molecular weights by gel permeation chromatography of the ring-opened copolymer used in the present invention is preferably 1.0 to 5.0, more preferably 1.5 to 3.0.

The glass transition temperature (Tg) of the ring-opened copolymer used in the present invention is preferably -90 to 0°C, more preferably -85 to -5°C, still more preferably -80 to -10°C. By controlling the glass transition temperature of the ring-opened copolymer used in the present invention within such ranges, the holding power of the resulting adhesive composition can be further enhanced.

The ring-opened copolymer used in the present invention may have a terminally modified polymer chain or may have a terminally unmodified polymer chain without a terminally modifying group, and may have a molecular structure composed of only carbon atoms and hydrogen atoms. More preferred modifying groups for forming such a terminal modifying group are modifying groups containing an atom selected from the group consisting of nitrogen, oxygen, phosphorus, sulfur, and silicon atoms. Among these, still more preferred are modifying groups containing an atom selected from the group consisting of nitrogen, oxygen, and silicon atoms.

The ring-opened copolymer used in the present invention may be prepared by any process without limitation, and examples of such processes include a process involving copolymerizing the monocyclic olefin and the polycyclic olefin in the presence of a ring-opening polymerization catalyst. In particular, a process involving ring-opening metathesis polymerization of the monocyclic olefin and the polycyclic olefin is preferred.

In the polymerization, a monomer mixture containing the monocyclic olefin and the polycyclic olefin is used, and the amounts of the monomers therein are those that provide the above-mentioned proportions.

The ring-opening polymerization catalyst may be any catalyst capable of catalyzing ring-opening polymerization of the monocyclic olefin and the polycyclic olefin. In particular, ruthenium-carbene complexes are preferred because they enable suitable control of the cis/trans ratio of the structural unit derived from a polycyclic olefin within the ranges mentioned above.

Specific examples of ruthenium-carbene complexes include bis(tricyclohexylphosphine)benzylidene ruthenium dichloride, bis(triphenylphosphine)-3,3-diphenylpropenylidene ruthenium dichloride, bis(tricyclohexylphosphine)t-butylvinylidene ruthenium dichloride, dichloro-(3-phenyl-1H-inden-1-ylidene)bis(tricyclohexylphosphine)ruthenium, bis(1,3-diisopropylimidazolin-2-ylidene)benzylidene ruthenium dichloride, bis(1,3-dicyclohexylimidazolin-2-ylidene)benzylidene ruthenium dichloride, (1,3-dimesitylimidazolin-2-ylidene) (tricyclohexylphosphine)benzylidene ruthenium dichloride, (1,3-dimesitylimidazolidin-2-ylidene) (tricyclohexylphosphine)benzylidene ruthenium dichloride, bis(tricyclohexylphosphine)ethoxymethylidene ruthenium dichloride, (1,3-dimesitylimidazolidin-2-ylidene) (tricyclohexylphosphine)ethoxymethylidene ruthenium dichloride, and 1,3-bis-(2,4,6-trimethylphenyl)-2-(imidazolidinylidene) (dichlorophenylmethylene) (tricyclohexylphosphine)ruth enium (so-called Grubbs catalyst 2nd generation). Among the ruthenium-carbene complexes listed above, more preferred are dichloro-(3-phenyl-1H-inden-1-ylidene)bis(tricyclohexylphosphine)ruthenium, and 1,3-bis-(2,4,6-trimethylphenyl)-2-(imidazolidinylidene) (dichlorophenylmethylene) (tricyclohexylphosphine)ruth enium because they enable suitable control of the cis/trans ratio of the structural unit derived from a polycyclic olefin. Still more preferred is dichloro-(3-phenyl-1H-inden-1-ylidene)bis(tricyclohexylphosphine)ruthenium. These ring-opening polymerization catalysts may be used alone or in a mixture of any two or more of these.

The ring-opening polymerization catalyst is used at a molar ratio to the monomers used in copolymerization (ring-opening polymerization catalyst:monomers used in copolymerization) within the range of preferably 1:500 to 1:2,000,000, more preferably 1:700 to 1:1,500,000, still more preferably 1:1,000 to 1:1,000,000.

The polymerization reaction may be performed in the absence of a solvent or in a solution. In the case of copolymerization in a solution, the solvent may be any solvent without limitation as long as it is inert during the polymerization reaction and can dissolve the compounds used in the copolymerization including the monocyclic olefin, the polycyclic olefin, and the polymerization catalyst. Preferred are hydrocarbon-based solvents and halogen-containing solvents. Specific examples of hydrocarbon-based solvents include aromatic hydrocarbons such as benzene, toluene, xylene, and ethylbenzene; aliphatic hydrocarbons such as hexane, n-heptane, and n-octane; alicyclic hydrocarbons such as cyclohexane, cyclopentane, and methylcyclohexane; and the like. Specific examples of halogen-containing solvents include haloalkanes such as dichloromethane and chloroform; aromatic halogens such as chlorobenzene and dichlorobenzene; and the like. These solvents may be used alone or in a mixture of any two or more of these.

In the process of ring-opening polymerization of the monocyclic olefin and the polycyclic olefin, in order to adjust the molecular weight of the resulting ring-opened copolymer, an olefin compound or a diolefin compound may be optionally added as a molecular weight modifier to the polymerization system.

The olefin compound may be any organic compound without limitation as long as it has an ethylenically unsaturated bond. Examples thereof include α-olefins such as 1-butene, 1-pentene, 1-hexene, and 1-octene; styrene compounds such as styrene and vinyltoluene; halogen-containing vinyl compounds such as acryl chloride; vinyl ethers such as ethyl vinyl ether and i-butyl vinyl ether; silicon-containing vinyl compounds such as allyltrimethoxysilane, allyltriethoxysilane, allyltrichlorosilane, and styryltrimethoxysilane; disubstituted olefins such as 2-butene and 3-hexene; and the like.

Examples of the diolefin compound include non-conjugated diolefins such as 1,4-pentadiene, 1,4-hexadiene, 1,5-hexadiene, 1,6-heptadiene, 2-methyl-1,4-pentadiene, and 2,5-dimethyl-1,5-hexadiene.

The amount of the olefin compound or the diolefin compound used as the molecular weight modifier can be appropriately selected according to the molecular weight of the target ring-opened copolymer, and the amount thereof expressed as a molar ratio to the monomers used in copolymerization is in the range of typically 1/100 to 1/100,000, preferably 1/200 to 1/50,000, more preferably 1/500 to 1/10,000.

In the case where the ring-opened copolymer used in the present invention is prepared as a copolymer having a terminally modified polymer chain, a modifying group-containing olefinically unsaturated hydrocarbon compound is preferably used as a molecular weight modifier instead of the olefin compound and the diolefin compound. In the presence of such a modifying group-containing olefinically unsaturated hydrocarbon compound, the copolymerization can result in a ring-opened copolymer in which the modifying group is suitably introduced to polymer chain ends.

The modifying group-containing olefinically unsaturated hydrocarbon compound may be any compound having a modifying group and one metathesis polymerizable olefinic carbon-carbon double bond, although not particularly limited thereto.

The polymerization temperature is preferably -100°C or higher, more preferably -50°C or higher, still more preferably 0°C or higher, particularly preferably 15°C or higher, although not particularly limited thereto. The upper limit of the polymerization temperature is preferably lower than 120°C, more preferably lower than 100°C, still more preferably lower than 90°C, particularly preferably lower than 80°C, although not particularly limited thereto. Although the polymerization reaction time is also not particularly limited, it is preferably 1 minute to 72 hours, more preferably 10 minutes to 20 hours.

To the ring-opened copolymer obtained by the polymerization reaction may be optionally added an antioxidant such as a phenol-based stabilizer, a phosphorus-based stabilizer, or a sulfur-based stabilizer. The amount of the antioxidant to be added can be determined depending on factors such as the type thereof. Additionally, an extender oil may also be added if needed. In the case where the ring-opened copolymer is prepared as a polymer solution, any known recovery method can be used to recover the ring-opened copolymer from the polymer solution. Examples of such methods include a method involving removing the solvent by steam stripping or the like, filtering out the solid, and drying the residue to afford the ring-opened copolymer as a solid; and the like.

### (Tackifying resin)

The adhesive composition according to the present invention contains the above-mentioned ring-opened copolymer and a tackifying resin.

In the present invention, the tackifying resin is a C5/C9 petroleum resin. Examples of resins usable as tackifying resin outside the subject-matter of the claims include rosin; modified rosins such as disproportionated rosins and dimerized rosins; esterified products of polyhydric alcohols such as glycol, glycerol, and pentaerythritol with rosin or modified rosins; terpene resins; C5 petroleum resins; C9 petroleum resins; aliphatic, aromatic, alicyclic, or aliphatic-aromatic copolymerized hydrocarbon resins other than C5/C9 resins and hydrides thereof; phenol resins; coumarone-indene resins; and the like. Among these, suitably used are aliphatic, aromatic, alicyclic, or aliphatic-aromatic copolymerized hydrocarbon resins and hydrides thereof. In particular, alicyclic hydrocarbon resins and hydrides of alicyclic hydrocarbon resins are suitably used. From the viewpoint of providing the resulting adhesive composition with further enhanced holding power and enhanced peel strength, the tackifying resin is a C5/C9 petroleum resin.

The softening point of the tackifying resin used in the present invention is not particularly limited, and is preferably 10 to 160°C, more preferably 40 to 150°C, still more preferably 70 to 140°C. By using a tackifying resin having a softening point within the above ranges, the holding power of the resulting adhesive composition can be further enhanced.

The content of the tackifying resin in the adhesive composition according to the present invention is preferably 1 to 150 parts by mass, more preferably 5 to 120 parts by mass, still more preferably 10 to 100 parts by mass relative to 100 parts by mass of the polymer component, although not particularly limited thereto. By controlling the content of the tackifying resin within the above ranges, the holding power of the resulting adhesive composition can be further enhanced.

The adhesive composition according to the present invention may further contain an antioxidant in addition to the ring-opened copolymer and the tackifying resin if needed. Any type of antioxidant can be used without limitation, and examples thereof include hindered phenol compounds such as pentaerythritol tetrakis[3-(3,5-di-t-butyl-4-hydroxyphenyl)propionate], 2,6-di-t-butyl-p-cresol, and di-t-butyl-4-methylphenol; thiodicarboxylate esters such as dilauryl thiopropionate; phosphorous acid salts such as tris(nonylphenyl)phosphite; and the like. The amount of the antioxidant used is not particularly limited, and is preferably 10 parts by mass or less, more preferably 0.1 to 5 parts by mass relative to 100 parts by mass of the polymer component. The antioxidant may be a single antioxidant or may include a combination of two or more antioxidants.

The adhesive composition according to the present invention preferably further contains a plasticizer. As the plasticizer, any of conventionally known plasticizers for use in adhesive compositions can be used. Specific examples thereof include aromatic, paraffinic, and naphthenic processed oils; liquid polymers such as polyisobutene and isobutylene; and the like. These plasticizers may be used alone or in combination. The content of the plasticizer in the adhesive composition according to the present invention is preferably 500 parts by mass or less, more preferably 300 parts by mass or less, still more preferably 100 parts by mass or less relative to 100 parts by mass of the polymer component. The presence of the plasticizer in an amount within the above ranges further enhances the holding power of the resulting adhesive composition.

In the case where the adhesive composition according to the present invention further contains the plasticizer in addition to the ring-opened polymer and the tackifying resin, the contents of the components are preferably as follows: the content of the ring-opened copolymer is preferably 10 to 70% by mass, more preferably 13 to 65% by mass, still more preferably 15 to 60% by mass; the content of the tackifying resin is preferably 20 to 80% by mass, more preferably 25 to 80% by mass, still more preferably 30 to 75% by mass; and the content of the plasticizer is preferably 65% by mass or less, more preferably 60% by mass or less, still more preferably 55% by mass or less. By controlling the contents of the ring-opened copolymer, the tackifying resin, and the plasticizer within the above ranges, the holding power of the resulting adhesive composition can be enhanced.

The adhesive composition according to the present invention may contain additional additives such as a wax, a heat stabilizer, an ultraviolet absorbing agent, and a filler. The adhesive composition according to the present invention is preferably a solventless or solvent-free composition.

Any wax can be incorporated in the adhesive composition according to the present invention. Examples thereof include, but are not limited to, polyethylene waxes, ethylene-vinyl acetate copolymer waxes, oxidized polyethylene waxes, paraffin waxes, microcrystalline waxes, Fischer-Tropsh waxes, oxidized Fischer-Tropsh waxes, hydrogenated cater oil waxes, polypropylene waxes, by-product polyethylene waxes, hydroxylated stearamide waxes, and the like. These waxes may be used alone or in combination. The content of the wax in the adhesive composition according to the present invention is preferably 10 to 200 parts by mass, more preferably 20 to 150 parts by mass relative to 100 parts by mass of the polymer component, although not particularly limited thereto.

In the production of the adhesive composition according to the present invention, the ring-opened copolymer, the tackifying resin, and optional additives can be mixed by any method without limitation. Examples thereof include a method involving dissolving the materials in a solvent, homogeneously mixing these, and removing the solvent by heating or the like; a method involving melt mixing the materials with a kneader or the like; and the like. Among these methods, melt mixing is suitable from the viewpoint of higher efficiency of mixing. The melt mixing temperature is preferably in the range of 100 to 200°C, although not particularly limited.

The adhesive composition according to the present invention has high holding power derived from the above-described ring-opened copolymer contained therein. For this reason, utilizing this advantageous feature, the adhesive composition according to the present invention can be suitably used for bonding of a variety of members to ensure adhesion with high holding power. For example, the adhesive composition according to the present invention is suitably used as a hot melt adhesive and an adhesive for adhesive tapes and labels. Specifically, the adhesive composition according to the present invention is used to form an adhesive layer composed of the adhesive composition according to the present invention on a sheet-like substrate for an adhesive tape or label, and is thus suitably used in an adhesive tape or label comprising an adhesive layer composed of the adhesive composition according to the present invention and a substrate.

### EXAMPLES

The present invention is hereinafter illustrated in greater detail with reference to examples and comparative examples. However, the present invention should not be construed as limited only to these examples. In the following examples, all "part(s)" and "%" are on a mass basis unless otherwise indicated.

The following methods were used to determine the properties.

[Weight average molecular weight (Mw), number average molecular weight (Mn), and molecular weight distribution (Mw/Mn) of ring-opened (co)polymer]

The weight average molecular weight (Mw) and the number average molecular weight (Mn) of each ring-opened (co)polymer were determined from charts based on polystyrene-equivalent molecular weights obtained by gel permeation chromatography (GPC). From the results, the molecular weight distribution (Mw/Mn) was calculated. Specific measurement conditions of gel permeation chromatography are as follows:
Measurement apparatus: HLC-8320GPC EcoSCE (available from TOSOH CORPORATION)
Column: two GMH-HR-H columns (available from TOSOH CORPORATION) connected in series
Detector: differential refractometer RI-8020 (available from TOSOH CORPORATION)
Solvent: tetrahydrofuran
Column temperature: 40°C
[Glass transition temperature (Tg) of ring-opened (co)polymer]

The glass transition temperature of each ring-opened (co)polymer was determined using a differential scanning calorimeter (DSC, X-DSC7000 available from Hitachi High-Tech Science Corporation) while increasing the temperature from -150°C to 40°C at a rate of 10°C/min.

### [Proportions of cyclopentene-derived structural units and 2-norbornene-derived structural units in each ring-opened (co)polymer]

Each of the ring-opened (co)polymers prepared was analyzed by ¹H-NMR spectroscopy to determine the compositional ratio of the monomer structures in the ring-opened (co)polymer.

### [Cis/trans ratios of double bonds in cyclopentene-derived structural units and double bonds in 2-norbornene-derived structural units]

Each of the ring-opened (co)polymers prepared was analyzed by ¹³C-NMR spectroscopy to determine the cis/trans ratio of double bonds in cyclopentene-derived structural units and the cis/trans ratio of double bonds in 2-norbornene-derived structural units.

### [Holding power of adhesive composition]

From each of the adhesive compositions prepared, a sample having an adhesive layer was formed by melting the adhesive composition at 180°C and forming a 30 µm thick coating of the adhesive composition on a 25 µm thick PET film. According to PSTC-107 Procedure A (holding power test method specified by Pressure Sensitive Tape Council of the United States), the holding power of the sample was evaluated using a stainless steel as an adherend on the basis of the time (minutes) until the bonded portion measuring 10 × 25 mm peeled off under a load of 1000 ± 5 g at a temperature of 50°C. A larger value indicates higher holding power.

### [Peel strength of adhesive composition]

Each of the samples having an adhesive layer prepared as above was tested for peel strength (N/m) at normal temperature according to PSTC-101 (180° peel adhesive test specified by Pressure Sensitive Tape Council of the United States) using a stainless steel as an adherend at 23°C at a tension rate of 300 mm/min. A larger value indicates higher adhesive force.

### [Production Example 1]

Under a nitrogen atmosphere, 300 g of cyclohexane, 1.18 mol of cyclopentene as a monocyclic olefin, 0.212 mol of 2-norbornene as a polycyclic olefin, and 0.472 mmol of 1-hexene were placed in a glass reactor with a stirrer. Subsequently, 0.0139 mmol of dichloro-(3-phenyl-1H-inden-1-ylidene)bis(tricyclohexylphosphine)ruthenium as a ring-opening polymerization catalyst was added thereto to cause polymerization to proceed at room temperature for 2 hours. After the polymerization reaction, an excess of vinyl ethyl ether was added to terminate the polymerization reaction. Thus, a polymer solution was prepared.

The polymer solution prepared by the polymerization reaction was poured into a large excess of methanol containing 2,6-di-t-butyl-p-cresol (BHT), and the precipitated polymer was collected and washed with methanol, and was then vacuum dried at 50°C for 24 hours to remove unreacted cyclopentene and 2-norbornene and afford a ring-opened copolymer (1). The resulting ring-opened copolymer (1) was analyzed according to the above methods to determine the weight average molecular weight (Mw), the number average molecular weight (Mn), the molecular weight distribution (Mw/Mn), the glass transition temperature (°C), the proportion of cyclopentene-derived structural units, the proportion of 2-norbornene-derived structural units, the cis/trans ratio of double bonds in cyclopentene-derived structural units, and the cis/trans ratio of double bonds in 2-norbornene-derived structural units. The results are shown in Table 1.

### [Production Example 2]

Under a nitrogen atmosphere, 300 g of cyclohexane, 1.35 mol of cyclopentene as a monocyclic olefin, 0.085 mol of 2-norbornene as a polycyclic olefin, and 1.15 mmol of 1-hexene were placed in a glass reactor with a stirrer. Subsequently, 0.0144 mmol of dichloro-(3-phenyl-1H-inden-1-ylidene)bis(tricyclohexylphosphine)ruthenium as a ring-opening polymerization catalyst was added thereto to cause polymerization to proceed at room temperature for 2 hours. After the polymerization reaction, an excess of vinyl ethyl ether was added to terminate the polymerization reaction. Thus, a polymerization solution was prepared.

The polymer solution prepared by the polymerization reaction was poured into a large excess of methanol containing 2,6-di-t-butyl-p-cresol (BHT), and the precipitated polymer was collected and washed with methanol, and was then vacuum dried at 50°C for 24 hours to remove unreacted cyclopentene and 2-norbornene and afford a ring-opened copolymer (2). The resulting ring-opened copolymer (2) was analyzed according to the above methods to determine the weight average molecular weight (Mw), the number average molecular weight (Mn), the molecular weight distribution (Mw/Mn), the glass transition temperature (°C), the proportion of cyclopentene-derived structural units, the proportion of 2-norbornene-derived structural units, the cis/trans ratio of double bonds in cyclopentene-derived structural units, and the cis/trans ratio of double bonds in 2-norbornene-derived structural units. The results are shown in Table 1.

### [Production Example 3]

Under a nitrogen atmosphere, 300 g of cyclohexane, 1.35 mol of cyclopentene as a monocyclic olefin, 0.085 mol of 2-norbornene as a polycyclic olefin, and 0.718 mmol of 1-hexene were placed in a glass reactor with a stirrer. Subsequently, 0.0144 mmol of 1,3-bis-(2,4,6-trimethylphenyl)-2-(imidazolidinylidene) (dichlorophenylmethylene) (tricyclohexylphosphine)ruth enium as a ring-opening polymerization catalyst was added thereto to cause polymerization to proceed at room temperature for 2 hours. After the polymerization reaction, an excess of vinyl ethyl ether was added to terminate the polymerization reaction. Thus, a polymerization solution was prepared.

The polymer solution prepared by the polymerization reaction was poured into a large excess of methanol containing 2,6-di-t-butyl-p-cresol (BHT), and the precipitated polymer was collected and washed with methanol, and was then vacuum dried at 50°C for 24 hours to remove unreacted cyclopentene and 2-norbornene and afford a ring-opened copolymer (3). The resulting ring-opened copolymer (3) was analyzed according to the above methods to determine the weight average molecular weight (Mw), the number average molecular weight (Mn), the molecular weight distribution (Mw/Mn), the glass transition temperature (°C), the proportion of cyclopentene-derived structural units, the proportion of 2-norbornene-derived structural units, the cis/trans ratio of double bonds in cyclopentene-derived structural units, and the cis/trans ratio of double bonds in 2-norbornene-derived structural units. The results are shown in Table 1.

### [Production Example 4]

Under a nitrogen atmosphere, 300 g of cyclohexane, 1.47 mol of cyclopentene as a monocyclic olefin, and 0.440 mmol of 1-hexene were placed in a glass reactor with a stirrer. Subsequently, 0.0147 mmol of dichloro-(3-phenyl-1H-inden-1-ylidene)bis(tricyclohexylphosphine)ruthenium as a ring-opening polymerization catalyst was added thereto to cause polymerization to proceed at room temperature for 2 hours. After the polymerization reaction, an excess of vinyl ethyl ether was added to terminate the polymerization reaction. Thus, a polymerization solution was prepared.

The polymer solution prepared by the polymerization reaction was poured into a large excess of methanol containing 2,6-di-t-butyl-p-cresol (BHT), and the precipitated polymer was collected and washed with methanol, and was then vacuum dried at 50°C for 24 hours to remove unreacted cyclopentene and 2-norbornene and afford a ring-opened polymer (4). The resulting ring-opened polymer (4) was analyzed according to the above methods to determine the weight average molecular weight (Mw), the number average molecular weight (Mn), the molecular weight distribution (Mw/Mn), the glass transition temperature (°C), the proportion of cyclopentene-derived structural units, and the cis/trans ratio of double bonds in cyclopentene-derived structural units. The results are shown in Table 1.

### [Example 1]

100 Parts of the ring-opened copolymer (1) prepared in Production Example 1 was placed into a stirring blade type kneader, and 100 parts of a C5/C9 petroleum resin (trade name "Quintone DX390N", available from ZEON Corporation, softening point: 91°C) as a tackifying resin, 20 parts of a process oil (trade name "Sunpure N100", available from JAPAN SUN OIL COMPANY, LTD.) as a plasticizer, and 1 part of an antioxidant (trade name "Irganox 1010", pentaerythritol tetrakis[3-(3,5-di-tert-butyl-4-hydroxyphenyl)propionate], available from BASF SE) were added thereto. The inside of the system was purged with nitrogen gas, and the materials were kneaded at 160 to 180°C for 1 hour to prepare an adhesive composition. The kneading was performed as follows: First, the ring-opened copolymer (1) and the tackifying resin were melted and mixed together at 160 to 180°C, followed by addition of the antioxidant. The mixture continued to be melted and mixed at 160 to 180°C to prepare an adhesive composition (the same procedure was also performed in the following examples and comparative examples). The resulting adhesive composition was analyzed for holding power and peel strength. The results are shown in Table 1.

### [Reference Example 2]

An adhesive composition was prepared in the same manner as in Example 1 except that 100 parts of a C5 petroleum resin (trade name "Quintone R100", available from ZEON Corporation, softening point: 96°C) was used as a tackifying resin in lieu of 100 parts of the C5/C9 petroleum resin (trade name "Quintone DX390N", available from ZEON Corporation, softening point: 91°C). The adhesive composition was likewise evaluated, and the results are shown in Table 1.

### [Example 3]

An adhesive composition was prepared in the same manner as in Example 1 except that 100 parts of the ring-opened copolymer (2) prepared in Production Example 2 was used in lieu of 100 parts of the ring-opened copolymer (1) prepared in Production Example 1. The adhesive composition was likewise evaluated, and the results are shown in Table 1.

### [Example 4]

An adhesive composition was prepared in the same manner as in Example 1 except that 100 parts of the ring-opened copolymer (3) prepared in Production Example 3 was used in lieu of 100 parts of the ring-opened copolymer (1) prepared in Production Example 1. The adhesive composition was likewise evaluated, and the results are shown in Table 1.

### [Comparative Example 1]

An adhesive composition was prepared in the same manner as in Example 1 except that 100 parts of the ring-opened copolymer (4) prepared in Production Example 4 was used in lieu of 100 parts of the ring-opened copolymer (1) prepared in Production Example 1. The adhesive composition was likewise evaluated, and the results are shown in Table 1.

### [Table 1]

**Table 1**

| | | Example 1 | Reference Example 2 | Example 3 | Example 4 | Comparative Example 1 |
|---|---|---|---|---|---|---|
| Ring-opened (co)polymer | | | | | | |
| | Production Example | Production Exmaple 1 | Production Exmaple 1 | Production Exmaple 2 | Production Exmaple 3 | Production Exmaple 4 |
| | Number average molecular weight [Mn] of ring-opened (co)polymer | 123000 | 123000 | 89800 | 111200 | 129000 |
| | Weight average molecular weight [Mw] of ring-opened (co)polymer | 228000 | 228000 | 157000 | 194100 | 239000 |
| | Molecular weight distribution [Mw/Mn] of ring-opened (co)polymer | 1.85 | 1.85 | 1.75 | 1.75 | 1.85 |
| | Glass transition temperature [°C] of ring-opened (co)polymer | -70 | -70 | -83 | -85 | -98 |
| | Proportion [%] of cyclopenten-derived structural units | 66.0 | 66.0 | 84.7 | 84.6 | 1000 |
| | Proportion [%] of 2-norbornene-derived structural units | 34.0 | 34.0 | 15.3 | 15.4 | 0 |
| | Cis/trans ratio of double bonds in cyclopenten-derived structural units | 16.0/84.0 | 16.0/84.0 | 15.8/84.2 | 16.2/83.8 | 16.0/84.0 |
| | Cis/trans ratio of double bonds in 2-norbornene-derived structural units | 20.0/80.0 | 20.0/80.0 | 13.8/86.2 | 60.6/39.4 | - |

| Tackifying resin | | | | | | |
|---|---|---|---|---|---|---|
| | Type of tackifying resin | C5/C9 resin | C5 resin | C5/C9 resin | C5/C9 resin | C5/C9 resin |

| Physical properties of adhesive compositions | | | | | | |
|---|---|---|---|---|---|---|
| | Holding power [min] | 2451 | 520 | 1791 | 721 | 96 |
| | Peel strength [N/m] | 493 | 51 | 618 | 568 | 530 |

As illustrated in Table 1, the adhesive compositions prepared using a ring-opened copolymer having a structural unit derived from a monocyclic olefin and a structural unit derived from a polycyclic olefin in combination with a tackifying resin exhibited high holding power (Examples 1, 3, and 4 as well as Reference Example 2). In particular, the adhesive compositions prepared using a C5/C9 petroleum resin as the tackifying resin exhibited high peel strength as well as high holding power (Examples 1, 3, and 4).

On the other hand, the use of the ring-opened polymer without polycyclic olefin-derived structural units resulted in an adhesive composition having low holding power (Comparative Example 1).

## Claims

1. An adhesive composition comprising a ring-opened copolymer containing a structural unit derived from a monocyclic olefin and a structural unit derived from a polycyclic olefin; and a tackifying resin, wherein
the tackifying resin is a C5/C9 petroleum resin.

2. The adhesive composition according to claim 1, wherein the proportion of the structural unit derived from a monocyclic olefin is 5 to 95% by mass of the ring-opened copolymer.

3. The adhesive composition according to claim 1 or 2, wherein the proportion of the structural unit derived from a polycyclic olefin is 5 to 95% by mass of the ring-opened copolymer.

4. The adhesive composition according to any one of claims 1 to 3, wherein the cis/trans ratio of the structural unit derived from a polycyclic olefin is 10/90 to 55/45.

5. The adhesive composition according to any one of claims 1 to 4, wherein the ring-opened copolymer has a glass transition temperature of -90 to 0°C, determined using a differential scanning calorimeter while increasing the temperature from -150°C to 40°C at a rate of 10°C/min.

6. The adhesive composition according to any one of claims 1 to 5, wherein the tackifying resin has a softening point of 70 to 140°C.

7. The adhesive composition according to any one of claims 1 to 6, further comprising a plasticizer.

8. The adhesive composition according to any one of claims 1 to 7, further comprising an antioxidant.

## Patentansprüche

1. Klebstoffzusammensetzung umfassend ein ringgeöffnetes Copolymer, das eine aus einem monocyclischen Olefin abgeleitete Struktureinheit und eine aus einem polycyclischen Olefin abgeleitete Struktureinheit enthält; und ein haftvermittelndes Harz, wobei
das haftvermittende Harz ein C5/C9-Erdölharz ist.

2. Klebstoffzusammensetzung nach Anspruch 1, wobei der Anteil der aus einem monocyclischen Olefin abgeleiteten Struktureinheit 5 bis 95 Masse-% des ringgeöffneten Copolymers beträgt.

3. Klebstoffzusammensetzung nach Anspruch 1 oder 2, wobei der Anteil der aus einem polyzyklischen Olefin abgeleiteten Struktureinheit 5 bis 95 Masse-% des ringgeöffneten Copolymers beträgt.

4. Klebstoffzusammensetzung nach einem der Ansprüche 1 bis 3, wobei das cis/trans-Verhältnis der aus einem polyzyklischen Olefin abgeleiteten Struktureinheit 10/90 bis 55/45 beträgt.

5. Klebstoffzusammensetzung nach einem der Ansprüche 1 bis 4, wobei das ringgeöffnete Copolymer eine Glasübergangstemperatur von -90 bis 0°C aufweist, bestimmt unter Verwendung eines Differential-Scanning-Kalorimeters bei Erhöhung der Temperatur von -150°C auf 40°C mit einer Geschwindigkeit von 10°C/min.

6. Klebstoffzusammensetzung nach einem der Ansprüche 1 bis 5, wobei das haftvermittelnde Harz einen Erweichungspunkt von 70 bis 140°C aufweist.

7. Klebstoffzusammensetzung nach einem der Ansprüche 1 bis 6, ferner umfassend einen Weichmacher.

8. Klebstoffzusammensetzung nach einem der Ansprüche 1 bis 7, ferner umfassend ein Antioxidans.

## Revendications

1. Une composition adhésive comprenant un copolymère à ouverture de cycle contenant une unité structurale dérivée d'une oléfine monocyclique et une unité structurale dérivée d'une oléfine polycyclique ; et une résine poissante, lequel
la résine poissante est une résine pétrolière C5/C9.

2. La composition adhésive selon la revendication 1, dans laquelle la proportion de l'unité structurale dérivée d'une oléfine monocyclique est de 5 à 95 % en masse du copolymère à ouverture de cycle.

3. La composition adhésive selon la revendication 1 ou 2, dans laquelle la proportion de l'unité structurale dérivée d'une oléfine polycyclique est de 5 à 95 % en masse du copolymère à ouverture de cycle.

4. La composition adhésive selon l'une quelconque des revendications 1 à 3, dans laquelle le rapport cis/trans de l'unité structurale dérivée d'une oléfine polycyclique est de 10/90 à 55/45.

5. La composition adhésive selon l'une quelconque des revendications 1 à 4, dans laquelle le copolymère à ouverture de cycle a une température de transition vitreuse de -90 à 0°C, déterminée à l'aide d'un calorimètre différentiel à balayage lors de l'augmentation de la température de -150°C à 40°C à une vitesse de 10°C/min.

6. La composition adhésive selon l'une quelconque des revendications 1 à 5, dans laquelle la résine poissante a un point de ramollissement de 70 à 140°C.

7. La composition adhésive selon l'une quelconque des revendications 1 à 6, comprenant en outre un plastifiant.

8. La composition adhésive selon l'une quelconque des revendications 1 à 7, comprenant en outre un antioxydant.
